(19) **Europäisches Patentamt**
**European Patent Office**
**Office européen des brevets**

(11) **EP 1 748 578 B1**

(12) **EUROPEAN PATENT SPECIFICATION**

(45) Date of publication and mention
of the grant of the patent:
**11.02.2009 Bulletin 2009/07**

(51) Int Cl.:
*H04B 7/155* (2006.01)      *H04H 20/02* (2008.01)

(21) Application number: **05106823.7**

(22) Date of filing: **25.07.2005**

(54) **Method and device for repeating isofrequency signals**

Verfahren und Gerät zur Zwischenverstärkung von Gleichfrequenzsignalen

Procédé et appareil pour la retransmission isofréquence d'un signal

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**31.01.2007 Bulletin 2007/05**

(73) Proprietor: **Harris Broadcast Systems Europe 6830 Rankweil-Brederis (AT)**

(72) Inventors:
• **Schoenbeck, Dietmar
6811 Goefis (AT)**

• **Kaufmann, Friedrich
6800 Feldkirch (AT)**

(74) Representative: **Fleuchaus, Michael A.
Fleuchaus & Gallo Partnerschaft
Patent- und Rechtsanwälte
Sollner Strasse 36
81479 München (DE)**

(56) References cited:
**EP-A- 0 772 310          EP-A- 1 261 148
EP-A- 1 555 769          US-A1- 2002 039 383**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method for re-transmitting single frequency signals, in particular of the type used in single frequency signal repeaters (so called gap fillers) for use in single frequency networks (SFNs) like digital video/ audio broadcasting (DVB/DAB) networks.

In the following, the invention will be described for a gap filler in a terrestrial DVB (DVB-T) application. It should however be noted that the scope of the present invention is not limited to this application but can be applied to any SFN repeater, in particular to mobile telephone repeaters or the like.

In DVB-T broadcasting networks the propagation of Coded Orthogonal Frequency Division Multiplexing (COFDM) signals, which are generally used, is crucial for correct transmission, as the reception of such signals may change very abruptly from practically error free reception to a loss of signal (LOS) condition.

Therefore, during DVB-T coverage planning, steps have to be taken to avoid shadowed areas, in which the signal strength used to be high enough for analogue TV reception but may be insufficient for DVB-T reception. The same applies to indoor DVB-T reception, this being even more critical if compared to the conditions under which satisfying indoor analogue TV reception is possible.

Under these conditions, the use of re-transmitters (repeaters), which broadcast the DVB-T signal into shadowed areas is necessary in order to fulfil the increased and more complex coverage requirements posed by commercial terrestrial distribution of digital TV.

Despite their propagation constraints, COFDM signals are preferred for digital TV broadcasting, since the problem of interference between adjacent channels, as known from analogue TV broadcasting, is inherently avoided. Thus, DVB-T broadcasting networks are preferably planned as single frequency networks, in which a unique frequency is used all over a specific coverage area leading to an increased spectral efficiency of the network.

However, as explained above, these DVB-T single frequency networks require the use of single or iso-frequency repeaters, which are also referred to as gap fillers, i.e. radio frequency repeaters receiving and transmitting at substantially the same frequency.

One of the most significant design constraints of such single frequency repeaters results from the effect that they receive and transmit signals at the same frequency, which leads to an inevitable signal coupling between the transmitting and the receiving antenna. Reception of a transmitter signal by the antenna of the receiver (echo) can lead to instability of the repeater, such as oscillation. In repeaters according to the state of the art, such back coupling or echoes set an upper limit for the maximum allowed gain of the repeater, which in turn limits the coverage area.

One conceivable way to minimize the risk of instabilities in repeaters is to increase isolation between the transmitting and receiving antennas.

However, besides increased costs involved with more sophisticated isolation means, increasing isolation only represents a sub-optimal solution, since - at least to some extent - the back coupling, and with it the echoes, remain.

The back coupling problem may even aggravate when considering moving objects (e.g, vehicles), which can act as a reflector for the transmitted signal resulting in a dynamically changing back coupling between the transmitting and the receiving antenna, and which can, of course, not be taken into account at the time of designing the repeater. Therefore, such dynamic back coupling effects cannot be avoided by isolation measures taken in the repeater.

EP 1 261 148 A1 discloses a process for re-transmitting single frequency signals and a single-frequency signal repeater occurs between the transmitting antenna and the receiving antenna, and where the process is of the type used a single frequency-repeater. This process has a cancellation step of said coupling between the transmitting antenna and the receiving antenna. Therefore, the process is capable of knowing the coupling of occurring, and cancelled it.

Thus, it is an object of the present invention to provide a method for re-transmitting signals, particularly single frequency signals, as well as a repeater, which reduce the echo signal propagation within the single frequency repeater, particularly with respect to dynamically changing echoes.

It is another object of the present invention to increase the limit for the maximum allowed gain of the repeater or the method of re-transmitting signals, particularly single frequency signals, while maintaining operation of the repeater stable and reliable.

It is further an object of the present invention to maximize the coverage area in a single frequency network or to cover a certain area of a single frequency network with a reduced number of repeaters.

These objects are solved by a method with the features of claim 1 as well as a repeater with the features of claim 15. Preferred embodiments and improvements are subject matter of the respective dependent claims.

According to the present invention, the method for re-transmitting single frequency signals, particularly of the type used in single frequency signal repeaters for use in single frequency networks like digital video/audio broadcasting (DVB/DAB) networks, comprises the following steps:

A receiving step, in which a first single frequency signal is received by means of at least one first antenna. Optionally, this first single frequency signal is converted to another frequency, preferably by down-mixing to an intermediate frequency (IF) signal.

In a first filtering step, the first single frequency signal $x$ or the IF signal $x$ is filtered to result in a filtered input signal $l$. Preferably, a band-pass filter is used for the input signal filtering, which lets pass substantially only the first single frequency signal or the IF signal, respectively.

In an optional first amplification step, said filtered input signal $l$ is amplified to result in an amplified input signal. Preferably, the amplification gain is controlled automatically to produce a substantially constant amplitude of said amplified input signal.

Amplifying the input signal is particularly useful in order to use the full conversion scale in an optional subsequent quantization step, in which said amplified input signal or said filtered input signal $l$ is quantized to result in a quantized input signal. Preferably, the quantization step uses conventional analogue-to-digital conversion in order to benefit from the advantages of digital signal processing of the amplified input signal or the filtered input signal $l,$ respectively, in subsequent steps.

In an optional demodulation step, said amplified input signal, said filtered input signal $l$ and/or said quantized input signal is demodulated to result in a demodulated input signal.

In an equalizing step said filtered input, amplified, quantized and/or demodulated input signal is equalized to produce an equalized signal (processing signal $m$). The equalization step according to the method of the invention at least minimizes a back coupling signal $a$ between said first and second antenna. Preferably, in order to achieve this, said processing signal $m$ is at least partially analyzed.

In a cancellation step, a cancellation signal $f$ is generated based on said processing signal $m$. Preferably, this is done by using the result of said analysis of the processing signal $m$. Further, in a feedback step, said cancellation signal $f$ is then fed back to said processing signal $m$ for echo cancellation.

Further, in a conversion step, said processing signal $m$ is converted into a second single frequency signal, preferably of substantially the same frequency as said first single frequency signal.

According to the present invention, the equalization step further comprises controlled phase shifting of said processing signal $m$ by at least one predetermined phase angle $\Psi$. Preferably, said phase shifting is controlled using the result of said analysis of the processing signal $m$.

In a second filtering step, said second single frequency signal is filtered to result in a filtered second single frequency signal. Preferably, as in the case of the first single frequency signal, a band-pass filter is used which lets pass substantially only the second single frequency signal.

In a second amplification step according to the invention, said filtered second single frequency signal is amplified to produce an amplified second single frequency signal for further transmission. In a transmission step, said amplified second single frequency signal is transmitted by means of at least one second antenna.

The integration of phase shifting in the equalization step has several advantages, if compared to prior art single frequency re-transmitting solutions. Firstly, it permits higher accuracy in echo estimation than do solutions, which solely rely on uncorrelated measurements of the power density spectrum of the received signal. Secondly, the higher accuracy of the echo estimation can be used to increase the speed in which the cancellation function or filter can adapt to a change in the coupling between the transmitting and receiving antenna.

Most important, the superior cancellation performance of a re-transmitting solutions according to the present invention can - for a given limited isolation between transmitting and receiving antenna - be used to increase the output signal gain without the risk of increasing the echo signal level that is received from the transmitting antenna and which could cause the repeater to become unstable.

In a preferred embodiment of the method according to the invention, said cancellation signal $f$ is generated based on said processing signal $m$ using an adaptive filter with a transfer function $F(z)$.

In another preferred embodiment of the method according to the invention, said equalization step comprises capturing said filtered input, amplified, quantized and/or demodulated input signal, continuously or at predetermined points in time, resulting in a captured signal $c$.

In another preferred embodiment of the method according to the invention, said equalization step comprises analyzing the captured signal $c$ and controlling said phase shifting using the result of said analysis of the captured signal $c$.

In yet another preferred embodiment of the method according to the invention, said equalization step comprises controlling the generation of said cancellation signal $f$ using the result of said analysis of the captured signal $c$.

Preferably, said equalization step comprises delaying said processing signal $m$ by at least one, preferably by a set of predetermined and most preferably fixed time intervals $T$ to form the basis of said cancellation signal $f$.

Thus, said equalization step uses said predetermined delayed instances of the processing signal $m$, which are multiplied with (filter) coefficients, most preferably adaptive (filter) coefficients, summed up and fed back as cancellation signal $f$ to the processing signal $m$ to cancel out signal distortions (quantized/decision feedback equalization), particularly echoes resulting from back coupling of the transmitted signal. When the processing signal $m$ is digital, the cancellation signal $f$ has to be digital-to-analogue converted and fed back to a point in the signal path before the processing signal $m$ is digitized.

Preferably, said equalization step further comprises controlling said delay(s) and/or said (decision feedback filter) coefficients using the result of said analysis of the captured signal *c*.

In a particularly preferred embodiment of the method according to the invention, said equalization step comprises measuring the spectral power densities $|M|^2$ of said processing signal *m* for preferably three values of $\Psi$, and most preferably for $\Psi \in \left\{ 0, \dfrac{2\pi}{3}, \dfrac{4\pi}{3} \right\}$, resulting in the corresponding spectral power densities $|M_A|^2$, $|M_B|^2$ and $|M_C|^2$ of said processing signal *m*.

In another preferred embodiment of the method according to the invention, said cancellation signal *f* is generated by adaptively filtering said processing signal *m* shifted in phase by $\Psi$ (phase shifted processing signal *y*) using said transfer function *F(z)*. Particularly preferably, the phase shift angle $\Psi$ is $\Psi$ is $\pm \dfrac{2\pi}{3}$, however, any other phase shift angle $\Psi$ may also be used within the scope of the present invention.

In yet another preferred embodiment of the method according to the invention, said first single frequency signal *x* or said IF signal *x*, respectively, has a spectral function *X(z)*, said signal coupling between said first and second antenna has a transfer function *A(z)*, said input filtering has a transfer function *H(z)*, said phase shifting can be expressed by a transfer function $e^{j\Psi}$, said processing signal has a spectral function *M(z)* and said processing signal shifted in phase has a spectral function *Y(z)*, wherein said spectral function *M(z)* can be expressed as

$$M = X \cdot H + Y \cdot A \cdot H - Y \cdot F \text{, with } Y = M \cdot e^{j\Psi}.$$

It follows that

$$M = X \cdot H + M \cdot e^{j\Psi} \cdot (A \cdot H - F) \text{ or } M = X \cdot \frac{H}{1 - e^{j\Psi}(H \cdot A - F)} = X \cdot \frac{H}{1 - e^{j\Psi}\Delta},$$

with $\Delta = H \cdot A - F = r \cdot e^{j\varphi}$.

In another particularly preferred embodiment of the method according to the invention, said equalization step comprises using a help function *T*, where

$$T = \frac{\dfrac{1}{\left|M_A\right|^2} + \dfrac{1}{\left|M_B\right|^2} \cdot e^{-j\frac{2\pi}{3}} + \dfrac{1}{\left|M_C\right|^2} \cdot e^{-j\frac{4\pi}{3}}}{\dfrac{1}{\left|M_A\right|^2} + \dfrac{1}{\left|M_B\right|^2} + \dfrac{1}{\left|M_C\right|^2}}$$

is based on said measured spectral power densities $|M_A|^2$, $|M_B|^2$ and $|M_C|^2$ of said processing signal *m*, for determining and minimizing

$$\Delta = \frac{-2 \cdot T}{1 + \sqrt{1 - 4 \cdot |T|^2}} = H \cdot A - F,$$

i.e. cancelling the echo feedback signal $H \cdot A$, to yield

$$M = X \cdot \frac{H}{1 - e^{j\psi}\Delta} \xrightarrow{\Delta \to 0} X \cdot H$$

by iteratively adapting said filter transfer function $F(z)$, wherein an accordingly modified impulse response $f_{i+1} = f_i + \delta$ of said filtering step results from the addition of $\delta$, i.e. the inverse Fourier transform of $\Delta$, $\delta = iFFT(\Delta)$, to the former impulse response $f_i$ of said filtering step.

In a preferred embodiment of the method according to the invention, during an initialization step a training signal sequence $d$, which is preferably a pseudo-random sequence, is used as input signal $x$ to obtain an initial value $f_1$ of the impulse response $f_i$ of said adaptive filtering step.

Preferably, said adaptive filtering step uses a differential signal $e$ between said captured processing signal $c$ and said training signal sequence $d$, which is delayed according to the delay of said captured processing signal $c$ with respect to said input signal, as a criterion to optimize the filter coefficients of said adaptive filtering step by minimizing the power of said difference signal $e$ being proportional to its spectral power density $|E|^2$ (Minimum Mean Square Error algorithm).

In another preferred embodiment of the method according to the invention, said adaptive filtering step involves an optimization algorithm selected from a group including a Least Mean Squares (LMS) algorithm, a steepest descent algorithm, a differential steepest descent algorithm, a gradient algorithm, a stochastic gradient algorithm and a Recursive Least Squares (RLS) algorithm.

The repeater for single frequency signals according to the present invention comprises at least one first antenna, which receives a first single frequency signal. Optionally, a converter is provided which converts said first single frequency signal to another frequency, preferably by down-mixing to an IF signal.

The repeater according to the invention has an input filter, preferably a band-pass filter, which filters said first single frequency signal $x$ or said IF signal $x$, respectively, to result in a filtered input signal $l$.

Optionally, an input amplifier is provided, which amplifies said filtered input signal $l$ to result in an amplified input signal. Preferably an automatic gain control amplifier (AGC) is used, which controls the amplification gain automatically to produce a substantially constant amplitude of said amplified input signal.

In a preferred embodiment of the repeater according to the invention, a quantizer is provided following the AGC in the signal path. Preferably, an analogue-to-digital converter is used as quantizer, which quantizes said amplified input signal, to result in a quantized input signal.

In another preferred embodiment of the repeater, a demodulator demodulates said amplified input signal, said filtered input signal or said quantized input signal to result in a demodulated input signal.

The repeater according to the invention further comprises an equalizer, which equalizes said filtered, amplified, quantized and/or demodulated input signal (processing signal $m$).

Moreover, in the repeater according to the invention, a converter is provided, which converts said processing signal $m$ to result in a second single frequency signal, the second single frequency signal preferably having the substantially same frequency as the first single frequency signal. An output filter filters said second single frequency signal to result in a filtered second single frequency signal, which is then amplified by an output amplifier to result in an amplified second single frequency signal. Finally, at least one second antenna (re-)transmits said amplified second single frequency signal.

In the repeater according to the present invention said equalizer is equipped so as to at least reduce a coupling signal $a$ between said first and second antenna. Optionally, for this purpose, analyzer means are provided, which at least partially analyze said processing signal $m$.

Furthermore, signal generator means generate a cancellation signal $f$ based on said processing signal $m$, preferably by using the result of said analysis of the processing signal $m$. Said cancellation signal $f$ is fed back to said processing signal $m$ by feed-back means. According to the present invention, said equalizer further comprises a variable phase shifter which shifts the phase of said processing signal $m$ by a at least one predetermined phase angle $\Psi$. Preferably, said phase shifter is controlled using the result of said analysis of the processing signal $m$.

Other preferred repeaters according to the present invention use at least one of the methods for re-transmitting a signal and particularly a single frequency signals as described above in order to minimize echoes resulting from a back coupling of the re-transmitted signal to the receiving antenna of the repeater.

Additional features and advantages of the present invention may be taken from the following detailed description of a particularly preferred embodiment with reference to the drawings, in which

Figure 1a shows a schematic block diagram of a repeater using the method according to the present invention;

Figure 1b shows a schematic signal flow diagram of a repeater using the method according to the present invention;

Figure 2 shows a schematic board layout of a repeater using the method according to the present invention;

Figure 3a shows a diagram of the amplitude run of the simulated output signal spectrum with respect to the carrier frequency for a first set of coupling paths without input signal ripple and without echo cancellation;

Figure 3b shows a diagram of the amplitude run of the simulated output signal spectrum according to figure 3a using echo cancellation according to the invention;

Figure 4a shows a diagram of the amplitude run of the simulated output signal spectrum with respect to the carrier frequency for a second set of coupling paths with input signal ripple and without echo cancellation;

Figure 4b shows a diagram of the amplitude run of the simulated output signal spectrum according to figure 4a using echo cancellation according to the invention;

Figure 5a shows a diagram of the amplitude run of the simulated output signal spectrum with respect to the carrier frequency for a third set of coupling paths with input signal ripple and without echo cancellation;

Figure 5b shows a diagram of the amplitude run of the simulated output signal spectrum according to figure 5a using echo cancellation according to the invention.

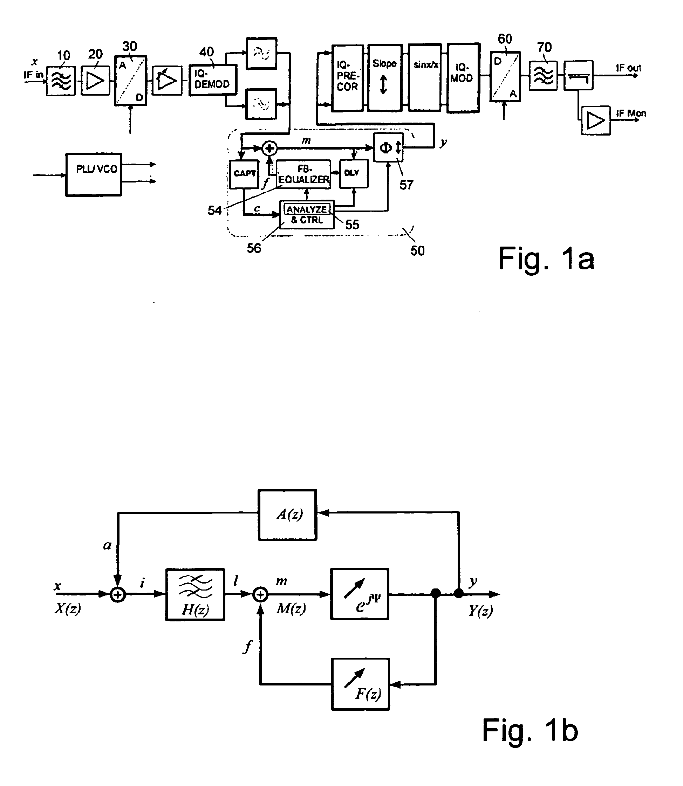

Figure 1 a shows a preferred embodiment of a repeater using the method of re-transmitting according to the present invention. The input signal $x$ is filtered by the band-pass filter 10 before being amplified by the automatic gain control amplifier 20. This has the advantage that the full conversion scale of the subsequent analogue-to-digital converter 30 can be used. Consecutively, an IQ-demodulator 40 is used to demodulate the digitized output signal of the analogue-to-digital converter 30.

In the embodiment of figure 1a, the subsequent equalizer 50 makes use of a digital feedback filter 54. For this, the processing signal m is firstly delayed and then serves as an input signal for the feedback filter 54. In addition, the demodulated output signal of the IQ-demodulator 40 is captured to result in the captured signal c, which is analyzed by the analyzing means 55. The analysis results are used by the control means 56 for controlling the filter coefficients of the feedback filter 54, the delay element and the phase shifter 57.

Following this, the phase shifted processing signal $y$ is fed to an IQ-modulator, in which an IQ-modulation of the equalized signal is performed. The modulated signal is then converted back to the analogue domain by the digital-to-analogue converter 60 before being filtered by the band-pass filter 70 and transmitted to the transmitting antenna.

Figure 1b shows a signal flow diagram of a preferred embodiment of the method according the invention, in which the first single frequency signal $x$ or IF signal $x,$ respectively, has a spectral function $X(z)$, the signal coupling between said first and second antenna has a transfer function $A(z)$, the band-pass filter filtering said signal $x$ has a transfer function $H(z)$, the phase shifting is expressed by a transfer function $e^{j\Psi}$, the processing signal has a spectral function $M(z)$ and the phase shifted processing signal has a spectral function $Y(z)$, wherein said spectral function $M(z)$ can be expressed as

$$M = X \cdot H + Y \cdot A \cdot H - Y \cdot F \ \text{ with } \ Y = M \cdot e^{j\Psi}.$$

It follows that

$$M = X \cdot H + M \cdot e^{j\Psi} \cdot (A \cdot H - F) \ \text{ or } \ M = X \cdot \frac{H}{1 - e^{j\Psi}(H \cdot A - F)} = X \cdot \frac{H}{1 - e^{j\Psi}\Delta},$$

wherein the complex overall feedback transfer function is denoted as $\Delta = r \cdot e^{j\varphi}$.

The aim is to minimize or completely cancel out the overall feedback $\Delta$ by iteratively adapting the filter coefficients of the cancellation filter with the transfer function $F(z)$.

It is now shown that an estimate for the overall feedback $\Delta$ for efficient dynamic echo cancellation can be achieved very effectively by phase shifting of the processing signal $m$ by a phase angle $\Psi$.

In a preferred embodiment of the method according to the invention, the spectral power densities $|M|^2$ of the

processing signal $m$ are measured for $\Psi \in \left\{ 0, \dfrac{2\pi}{3}, \dfrac{4\pi}{3} \right\}$. This results in the corresponding spectral power densities $|M_A|^2$, $|M_B|^2$ and $|M_C|^2$ of said processing signal $m$.

With $M = X \cdot \dfrac{H}{1 - e^{j\Psi}\Delta}$ and $Y = M \cdot e^{j\Psi}$, the spectral power density $|M|^2$ of the processing signal $m$ becomes

$$|M|^2 = |Y|^2 = |X|^2 \cdot \frac{|H|^2}{\left|1 - e^{j\Psi}\Delta\right|^2}$$

with the unknown overall feedback $\Delta = r \cdot e^{j\varphi}$. This leads to

$$\frac{1}{|M|^2} = \frac{1}{|X|^2} \cdot \frac{1}{|H|^2} \cdot \left[1 + r^2 - 2r\cos(\varphi + \Psi)\right].$$

For $\Psi \in \left\{ 0, \dfrac{2\pi}{3}, \dfrac{4\pi}{3} \right\}$, the mean spectral power density $|M_0|^2$ can be calculated from

$$\frac{1}{|M_0|^2} = \frac{1}{3} \cdot \left[ \frac{1}{|M_A|^2} + \frac{1}{|M_B|^2} + \frac{1}{|M_C|^2} \right].$$

With $\dfrac{1}{|M|^2} = \dfrac{1}{|X|^2} \cdot \dfrac{1}{|H|^2} \cdot \left[1 + r^2 - 2r\cos(\varphi + \Psi)\right]$ this leads to $\dfrac{1}{|M_0|^2} = \dfrac{1 + r^2}{|X|^2 \cdot |H|^2}$.

It follows that $\dfrac{|M_0|^2}{|M|^2} = 1 - \dfrac{2r}{1 + r^2}\cos(\varphi + \Psi)$ and

$$\frac{|M_0|^2}{|M_A|^2} = 1 - \frac{2r}{1 + r^2}\cos(\varphi),$$

$$\frac{|M_0|^2}{|M_B|^2} = 1 - \frac{2r}{1 + r^2}\cos(\varphi + \frac{2\pi}{3}),$$

$$\frac{\left|M_0\right|^2}{\left|M_C\right|^2} = 1 - \frac{2r}{1+r^2}\cos(\varphi - \frac{2\pi}{3}).$$

Using the above results the help function

$$T = \frac{\dfrac{1}{\left|M_A\right|^2} + \dfrac{1}{\left|M_B\right|^2} \cdot e^{-j\frac{2\pi}{3}} + \dfrac{1}{\left|M_C\right|^2} \cdot e^{-j\frac{4\pi}{3}}}{\dfrac{1}{\left|M_A\right|^2} + \dfrac{1}{\left|M_B\right|^2} + \dfrac{1}{\left|M_C\right|^2}}$$

becomes

$$T = \frac{\left|M_0\right|^2}{3} \cdot \left[\frac{1}{\left|M_A\right|^2} + \frac{1}{\left|M_B\right|^2} \cdot e^{-j\frac{2\pi}{3}} + \frac{1}{\left|M_C\right|^2} \cdot e^{-j\frac{4\pi}{3}}\right].$$

 This leads to

$$3T = 1 - \frac{2r}{1+r^2}\cos\varphi + \left[1 - \frac{2r}{1+r^2}\cos(\varphi + \frac{2\pi}{3})\right] \cdot e^{-j\frac{2\pi}{3}} + \left[1 - \frac{2r}{1+r^2}\cos(\varphi - \frac{2\pi}{3})\right] \cdot e^{j\frac{2\pi}{3}},$$

which can be simplified to

$$3T = 1 - \frac{2r}{1+r^2}\cos\varphi + e^{-j\frac{2\pi}{3}} + e^{j\frac{2\pi}{3}} - \frac{2r}{1+r^2}\cos\varphi \cdot \cos\frac{2\pi}{3} \cdot \left[e^{-j\frac{2\pi}{3}} + e^{j\frac{2\pi}{3}}\right]$$

$$- \frac{2r}{1+r^2}\sin\varphi \cdot \sin\frac{2\pi}{3} \cdot \left[e^{-j\frac{2\pi}{3}} - e^{j\frac{2\pi}{3}}\right]$$

and further to

$$3T = \frac{2r}{1+r^2} \cdot \left[-\cos\varphi + \cos\varphi \cdot \left(-\frac{1}{2}\right) - \sin\varphi \cdot \frac{\sqrt{3}}{2} \cdot 2j \cdot \frac{\sqrt{3}}{2}\right] = \frac{2r}{1+r^2} \cdot \left[-\frac{3}{2}\cos\varphi \cdot -j \cdot \frac{3}{2}\sin\varphi\right]$$

ultimately becoming

$$T = \frac{-r}{1+r^2} \cdot e^{j\varphi}$$

Thus, it follows for the unknown phase φ of the overall feedback φ = arg(-T). This means that φ can be derived from the measured spectral power densities $|M_A|^2$, $|M_B|^2$ and $|M_C|^2$ of the processing signal $m$ as

$$\varphi = \arg\left[-\frac{\dfrac{1}{|M_A|^2} + \dfrac{1}{|M_B|^2}\cdot e^{-j\frac{2\pi}{3}} + \dfrac{1}{|M_C|^2}\cdot e^{-j\frac{4\pi}{3}}}{\dfrac{1}{|M_A|^2} + \dfrac{1}{|M_B|^2} + \dfrac{1}{|M_C|^2}}\right].$$

Furthermore, $|T| = \left|\dfrac{r}{1+r^2}\right|$ leads to $r_{1,2} = \dfrac{1 \pm \sqrt{1 - 4\cdot|T|^2}}{2\cdot|T|}$ for $r > 0$. As $r$ shall have a small value, i.e. $r < 1$, the negative signed solution is pertinent, such that

$$r = \frac{1 - \sqrt{1 - 4\cdot|T|^2}}{2\cdot|T|} = \frac{2\cdot|T|}{1 + \sqrt{1 - 4\cdot|T|^2}}.$$

The unknown overall feedback

$$\Delta = r\cdot e^{j\varphi} = \frac{2\cdot|T|}{1 + \sqrt{1 - 4\cdot|T|^2}}\cdot e^{j\,\arg(-T)} = -\frac{2\cdot T}{1 + \sqrt{1 - 4\cdot|T|^2}}$$

can now be estimated based on the help function $T$ which is defined by said measured spectral power densities $|M_A|^2$, $|M_B|^2$ and $|M_C|^2$ of the processing signal $m$.

This estimation based on the controlled phase shifting step as part of the equalization according to the present invention can be used for determining and minimizing

$$\Delta = \frac{-2\cdot T}{1 + \sqrt{1 - 4\cdot|T|^2}} = H\cdot A - F,$$

i.e. for cancelling the echo feedback signal $H \cdot A$, to yield

$$M = X\cdot\frac{H}{1 - e^{j\psi}\Delta} \xrightarrow{\ \Delta\to0\ } X\cdot H$$

by iteratively adapting said filter transfer function $F(z)$, wherein an accordingly modified impulse response $f_{i+1} = f_i + \delta$ of the filtering step results from the addition of $\delta$, i.e. the inverse Fourier transform of $\Delta$, $\delta = iFFT(\Delta)$.

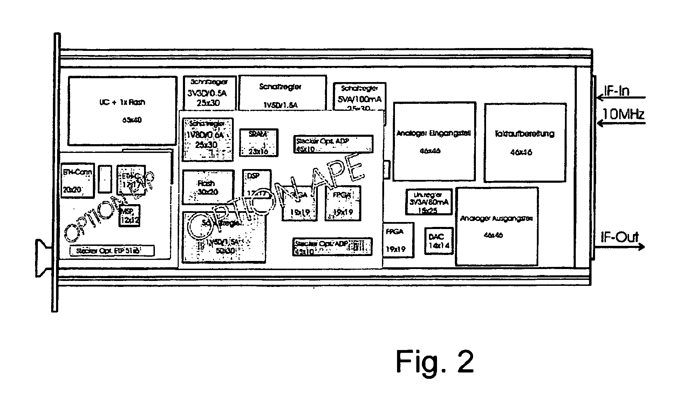

Figure 2 shows a schematic slot-in board layout of an embodiment of a repeater according to the invention with IF input and output ports as well as a clock input.

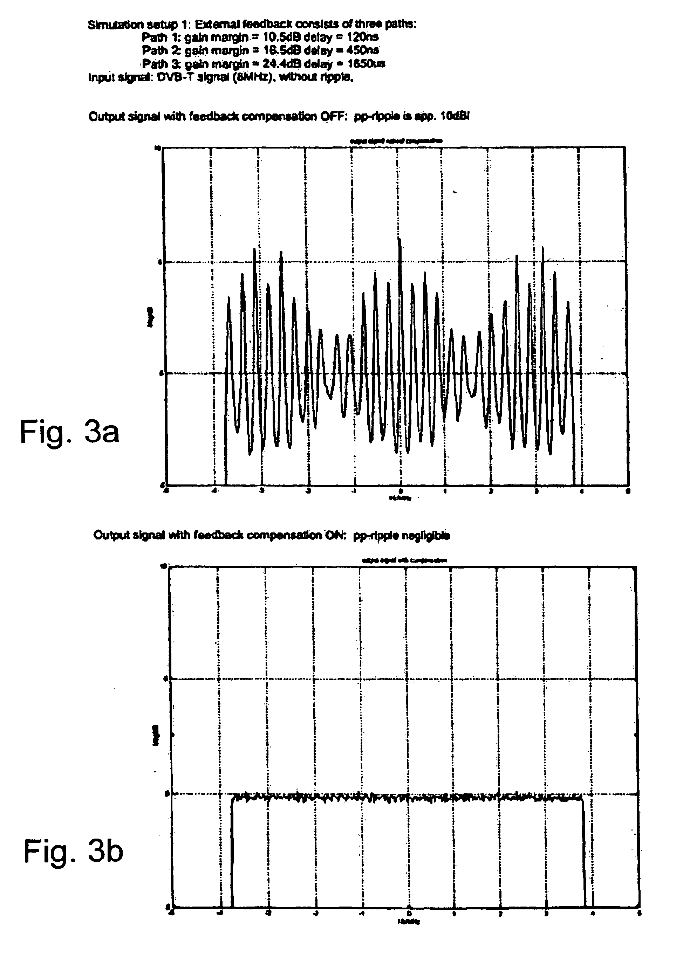

Figure 3a shows a diagram of the amplitude run of a simulated 8 MHz output signal spectrum with respect to the DVB-T carrier frequency for a first triplet of coupling paths without input signal ripple and without echo cancellation. The coupling paths' parameters are as follows:

Path 1: gain margin = 10.5 dB, delay = 120 ns
Path 2: gain margin = 16.5 dB, delay = 450 ns
Path 3: gain margin = 24.4 dB, delay = 1650 µs

As can be taken from figure 3a, without feedback compensation based on the three different feedback paths, the output signal suffers from a strong output ripple of approximately 10 dB, which means that echoes already cause instabilities in the repeater.

Figure 3b sows a simulation result using the same simulation parameters, however, with echo cancellation switched on. As can be taken from figure 3b the feedback compensation according to the present invention effectively cancels output ripple and thus avoids an unstable operation of the repeater. In turn, the output power of the repeater according to this embodiment of the invention can be increased by about 10 dB, which typically leads to a larger coverage area.

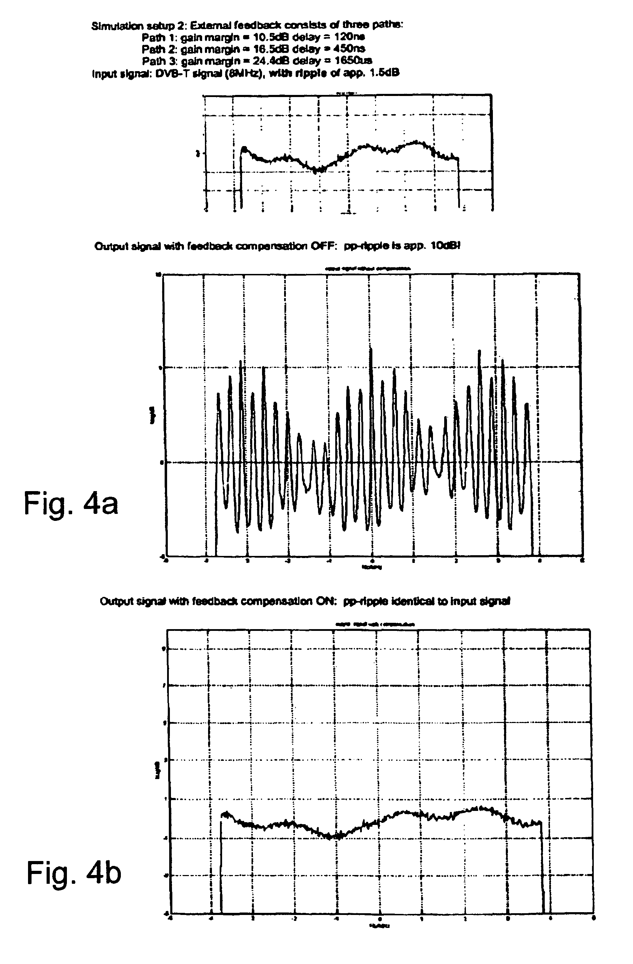

Figure 4a shows a diagram of the amplitude run of a simulated 8 MHz output signal spectrum with respect to the DVB-T carrier frequency for a second triplet of coupling paths with input signal ripple of approximately 1.5 dB and without echo cancellation. The coupling paths' parameters are identical to the parameters of the embodiment referred to in figure 3a and 3b.

As can be seen in figure 4a, without feedback compensation the output signal also suffers from a strong output ripple of approximately 10 dB. In contrast thereto, figure 4b sows a simulation result using the same simulation parameters, however, with echo cancellation switched on.

As can be taken from figure 4b the feedback compensation according to the present invention effectively cancels output ripple resulting from echoes and thus warrants for a stable operation of the repeater and accurate replication of the input signal. Again, the output power of the repeater according to this embodiment of the invention can be increased by about 10 dB.

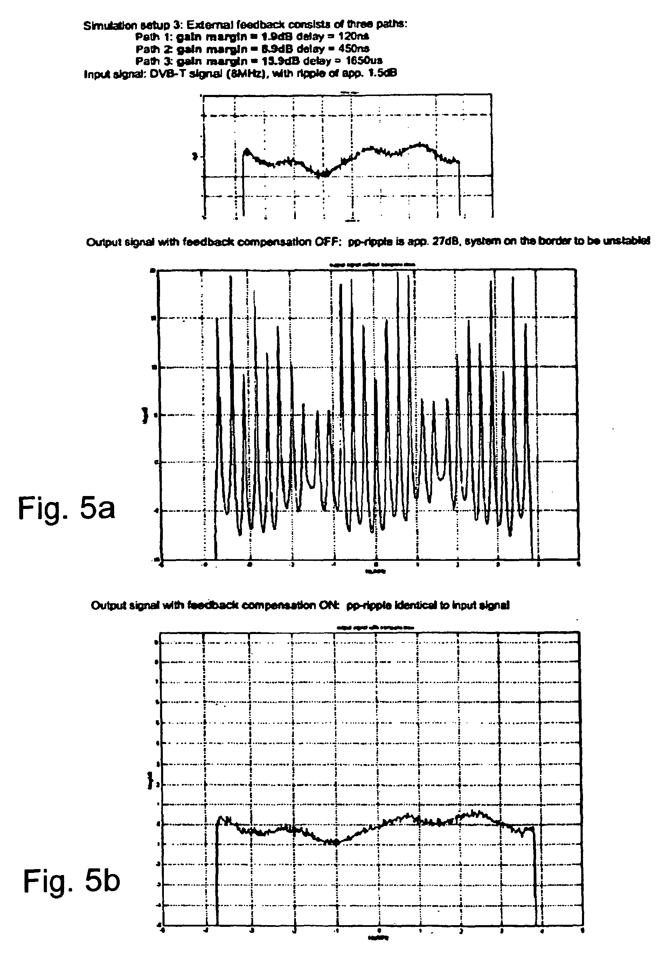

Figure 5a shows a diagram of the amplitude run of a simulated 8 MHz output signal spectrum with respect to the DVB-T carrier frequency for a third triplet of coupling paths with input signal ripple of approximately 1.5 dB and without echo cancellation. The paths' parameters are as follows:

Path 1: gain margin = 1.9 dB, delay = 120 ns
Path 2: gain margin = 8.9 dB, delay = 450 ns
Path 3: gain margin = 15.9dB, delay = 1650 µs

As can be taken from figure 5a, without feedback compensation based on the three different feedback paths, the output signal suffers from even stronger output ripple of approximately 27 dB, which means that the repeater is running unstable.

In contrast thereto, figure 5b sows a simulation result using the same simulation parameters, however, with echo cancellation switched on. As can be taken from figure 5b the feedback compensation according to the present invention effectively cancels output ripple resulting from echoes and warrants for a stable operation of the repeater and accurate replication of the input signal. Obviously, the output power of the repeater according to this embodiment of the invention can be increased by more than 10 dB without the risk of causing instabilities, such as oscillations.

**Claims**

1.    A method for re-transmitting single frequency signals, particularly of the type used in single frequency signal repeaters for use in single frequency networks (SFNs), the method comprising the following steps:

- receiving a first single frequency signal by means of at least one first antenna,
- converting said first single frequency signal to another frequency, by down-mixing it to an intermediate frequency (IF) signal,
- input filtering said first single frequency or said IF signal, utilizing a band-pass filter, to produce a filtered input signal,
- amplifying said filtered input signal to produce an amplified input signal, such that the amplification gain is controlled automatically to result in a substantially constant amplitude of said amplified input signal,
- quantizing said amplified input signal, by an analogue-to-digital conversion to produce a quantized input signal,
- demodulating said amplified input signal or said quantized input signal to produce a demodulated input signal,
- equalizing said filtered, amplified, quantized and/or demodulated input signal to provide an equalized signal, wherein said equalization at least reduces a coupling signal between said first and second antenna by generating a cancellation signal on the basis of said equalized signal, the cancellation signal being fed back to said equalized signal,
- converting said equalized signal into a second single frequency signal of substantially the same frequency as said first single frequency signal,
- filtering said second single frequency signal to produce a filtered second single frequency signal,
- amplifying said filtered second single frequency signal to produce an amplified second single frequency signal, and
- transmitting said amplified second single frequency signal by means of at least one second antenna,

**characterized in that**
said equalizing further comprises controlled phase shifting of said equalized signal by at least one predetermined phase angle Ψ, and further comprising measuring the spectral power densities of said equalized signal for at least two values of said predetermined angle and estimating the phase of the overall feedback using said measured spectral power densities.

2. The method according to claim 1, wherein the equalized signal is at least partially analyzed and wherein the analysis results are used for the generation of the cancellation signal and/or the analysis results are used to control the phase shifting of the equalized signal

3. The method according to either of claims 1 or 2, wherein said cancellation signal is generated based on said equalized signal using an adaptive filter with a transfer function $F(z)$.

4. The method according to either of claims 1 to 3, wherein said equalizing step comprises capturing said filtered, amplified, quantized and/or demodulated input signal continuously or at predetermined points in time to produce a captured signal.

5. The method according to claim 4, wherein said equalizing step comprises analyzing the captured signal and controlling said phase shifting using the result of the analysis of said captured signal and/or controlling the generation of said cancellation signal using the result of the analysis of said captured signal.

6. The method according to either of claims 1 to 5, wherein said equalizing step comprises delaying said equalized signal by at least one or by a set of predetermined and/or fixed time intervals to form the basis of said cancellation signal.

7. The method according to claim 6, wherein said equalizing step comprises controlling said delay(s) by said analyzed captured signal.

8. The method according to either of claims 1 to 7, wherein said equalizing step comprises measuring the spectral power densities $|M|^2$ of said equalized signal for three values of Ψ for $\Psi \in \left\{ 0, \dfrac{2\pi}{3}, \dfrac{4\pi}{3} \right\}$ resulting in the corresponding spectral power densities $|M_A|^2$, $|M_B|^2$ and $|M_C|^2$ of said equalized signal.

9. The method according to either of claims 3 to 8, wherein said cancellation signal is generated by adaptively filtering said phase Ψ shifted equalized signal using said transfer function $F(z)$.

10. The method according to either of claims 8 or 9, wherein said first single frequency signal or said IF signal has a spectral function $X(z)$, said signal coupling between said first and second antenna has a transfer function $A(z)$, said input filtering has a transfer function $H(z)$, said phase shifting can be expressed by a transfer function $e^{j\Psi}$, said processing signal has a spectral function $M(z)$ and said processing signal shifted in phase has a spectral function $Y(z)$, wherein said spectral function $M(z)$ can be expressed as

$$M = X \cdot H + Y \cdot A \cdot H - Y \cdot F,$$

such that

$$M = X \cdot H + M \cdot e^{j\psi} \cdot (A \cdot H - F)$$

or

$$M = X \cdot \frac{H}{1 - e^{j\psi}(H \cdot A - F)} = X \cdot \frac{H}{1 - e^{j\psi}\Delta},$$

and wherein

$$\Delta = H \cdot A - F = r \cdot e^{j\varphi}.$$

**11.** The method according to claim 10, wherein said equalizing step comprises using a help function $T$, where

$$T = \frac{\dfrac{1}{|M_A|^2} + \dfrac{1}{|M_B|^2} \cdot e^{-j\frac{2\pi}{3}} + \dfrac{1}{|M_C|^2} \cdot e^{-j\frac{4\pi}{3}}}{\dfrac{1}{|M_A|^2} + \dfrac{1}{|M_B|^2} + \dfrac{1}{|M_C|^2}}$$

based on said, measured spectral power densities $|M_A|^2$, $|M_B|^2$ and $|M_C|^2$ of said equalized signal for determining and minimizing $H \cdot A$ to yield

$$M = X \cdot \frac{H}{1 - e^{j\psi}\Delta} \xrightarrow{\Delta \to 0} X \cdot H$$

by iteratively adapting said filter transfer function $F(z)$, wherein an accordingly modified impulse response $f_{i+1} = f_i + \delta$ of said filtering step results from the addition of the inverse Fourier transform of $\Delta$, $\delta = iFFT(\Delta)$, to the former impulse response $f_i$ of said filtering step.

**12.** The method according to either of claims 3 to 11, wherein during an initialization step a pseudo-random training signal sequence is used as an input signal to obtain an initial value $f_1$ of the impulse response $f_i$ of said adaptive filtering step.

**13.** The method according to claim 12, wherein said adaptive filtering step uses a difference signal between said captured processing signal and said training signal sequence, which is delayed according to the delay of said captured processing signal with respect to said input signal, to optimize the filter coefficients of said adaptive filtering step by minimizing the spectral power density of said difference signal.

**14.** The method according to either of claims 3 to 13, wherein said adaptive filtering step comprises an optimization algorithm selected from a group comprising a Least Mean Squares (LMS) algorithm, a steepest descent algorithm, a differential steepest descent algorithm, a gradient algorithm, a stochastic gradient algorithm and a Recursive Least Squares (RLS) algorithm.

**15.** A repeater for single frequency signals, in particular of the type used in single frequency signal repeaters for use in single frequency networks (SFNs) comprising:

- at least one first antenna which receives a first single frequency signal,
- a converter which converts said first single frequency signal to another frequency by down-mixing to an IF signal,
- a band pass filter (10) which filters said first single frequency or said IF signal and having a filtered input signal as an output,
- an input amplifier (20), which amplifies said filtered input signal to produce an amplified input signal such that the amplification gain is controlled automatically to result in a substantially constant amplitude of said amplified input signal,
- an analogue-to-digital converter (30), , which quantizes said amplified input signal or said filtered input signal to produce a quantized input signal,
- a demodulator (40) which demodulates said amplified input signal, said filtered input signal or said quantized input signal to result in a demodulated input signal,
- an equalizer (50) which equalizes said filtered, amplified, quantized and/or demodulated input signal to produce an equalized signal, wherein said equalizer (50) reduces a coupling signal between said first and second antenna,
- generator means which generate a cancellation signal based on said equalized signal and feed-back means to feed back said cancellation signal to said equalized signal,
- a converter (60) which converts said equalized signal into a second single frequency signal of substantially the same frequency as the first single frequency signal,
- an output filter (70) which filters said second single frequency signal to create a filtered second single frequency signal,
- an output amplifier which amplifies said filtered second single frequency signal to create an amplified second single frequency signal, and
- at least one second antenna which transmits said amplified second single frequency signal,

**characterized in that**
said equalizer (50) further comprises a variable phase shifter (57) which shifts the phase of said equalized signal by a at least one predetermined phase angle Ψ, by measuring the spectral power densities of said equalized signal for at least two values of said predetermined angle and estimating the phase of the overall feedback using said measured spectral power densities.

16. The repeater according to claim 15, **characterized in that** the equalizer (50) includes adaptive filter means having a transfer function *F(z)*.

17. The repeater according to either of claims 15 or 16, **characterized in that** capturing means are provided for capturing said filtered, amplified, quantized and/or demodulated input signal continuously or at predetermined points in time to produce a captured signal.

18. The repeater according to either of claim 15 to 17, **characterized in that** analyzer means (55) are provided, which at least partially analyze said equalized signal and/or said captured signal.

19. The repeater according to either of claims 15 to 18, **characterized in that** delayer means are provided for delaying said analyzed captured signal.

20. The repeater according to either of claims 15 to 19, **characterized in that** the equalizer (50) comprises digital signal processing circuitry.

**Patentansprüche**

1. Verfahren zur Weiterübertragung von Gleichfrequenzsignalen, insbesondere von dem Typ, der in Gleichfrequenzsignal-Repeatern zur Verwendung in Gleichfrequenznetzen (SFN) verwendet wird, wobei das Verfahren die folgenden Schritte umfasst:- Empfangen eines ersten Gleichfrequenzsignals mit wenigstens einer ersten Antenne,

- Umwandeln des ersten Gleichfrequenzsignals in eine andere Frequenz durch Abwärtsmischen desselben zu einem Zwischenfrequenz- (ZF-) -Signal,
- Eingangsfiltern des ersten Gleichfrequenz- oder des ZF-Signals unter Verwendung eines Bandpassfilters, um ein gefiltertes Eingangssignal zu erzeugen,
- Verstärken des gefilterten Eingangssignals, um ein verstärktes Eingangssignal zu erzeugen, so dass der Verstärkungsgewinn automatisch gesteuert wird, um eine im Wesentlichen konstante Amplitude des verstärkten Eingangssignals zu ergeben,

- Quantisieren des verstärkten Eingangssignals durch eine Analog-DigitalWandlung, um ein quantisiertes Eingangsignal zu erzeugen,
- Demodulieren des verstärkten Eingangssignals oder des quantisierten Eingangssignals, um ein demoduliertes Eingangssignal zu erzeugen,
- Entzerren des gefilterten, verstärkten, quantisierten und/oder demodulierten Eingangssignals, um ein entzerrtes Signal bereitzustellen, wobei die Entzerrung ein Kopplungssignal zwischen der ersten und zweiten Antenne durch Generieren eines Kompensationssignals auf Basis des entzerrten Signals wenigstens reduziert, wobei das Kompensationssignal zu dem entzerrten Signal rückgekoppelt wird,
- Umwandeln des entzerrten Signals in ein zweites Gleichfrequenzsignal von im Wesentlichen derselben Frequenz wie das erste Gleichfrequenzsignal,
- Filtern des zweiten Gleichfrequenzsignals, um ein gefiltertes zweites Gleichfrequenzsignal zu erzeugen,
- Verstärken des gefilterten zweiten Gleichfrequenzsignals, um ein verstärktes zweites Gleichfrequenzsignal zu erzeugen, und
- Senden des verstärkten zweiten Gleichfrequenzsignals mit wenigstens einer zweiten Antenne,

**dadurch gekennzeichnet, dass**
die Entzerrung weiterhin eine gesteuerte Phasenverschiebung des entzerrten Signals um wenigstens einen vorbestimmten Phasenwinkel $\Psi$ aufweist, und weiterhin ein Messen der spektralen Leistungsdichten des entzerrten Signals für wenigstens zwei Werte des vorbestimmten Winkels sowie ein Schätzen der Phase der Gesamtrückkopplung unter Verwendung der gemessenen spektralen Leistungsdichten.

**2.** Verfahren gemäß Anspruch 1, wobei das entzerrte Signal wenigstens teilweise analysiert wird und wobei die Analyseergebnisse für die Generierung des Kompensationssignals verwendet werden und/oder die Analyseergebnisse dazu verwendet werden, die Phasenverschiebung des entzerrten Signals zu steuern.

**3.** Verfahren gemäß einem der Ansprüche 1 oder 2, wobei das Kompensationssignal auf Basis des entzerrten Signals unter Verwendung eines adaptiven Filters mit einer Übertragungsfunktion $F(z)$ generiert wird.

**4.** Verfahren gemäß einem der Ansprüche 1 bis 3, wobei der Entzerrungsschritt umfasst, das gefilterte, verstärkte, quantisierte und/oder demodulierte Eingangssignal kontinuierlich oder zu vorbestimmten Zeitpunkten zu erfassen, um ein erfasstes Signal zu erzeugen.

**5.** Verfahren gemäß Anspruch 4, wobei der Entzerrungsschritt umfasst, das erfasste Signal zu analysieren und die Phasenverschiebung unter Verwendung des Ergebnisses der Analyse des erfassten Signals zu steuern und/oder die Generierung des Kompensationssignals unter Verwendung des Ergebnisses der Analyse des erfassten Signals zu steuern.

**6.** Verfahren gemäß einem der Ansprüche 1 bis 5, wobei der Entzerrungsschritt umfasst, das entzerrte Signal um wenigstens einen oder um eine Menge aus vorbestimmten und/oder festen Zeitintervallen zu verzögern, um die Basis des Kompensationssignals zu bilden.

**7.** Verfahren gemäß Anspruch 6, wobei der Entzerrungsschritt umfasst, die Verzögerung(en) durch das analysierte erfasste Signal zu steuern.

**8.** Verfahren gemäß einem der Ansprüche 1 bis 7, wobei der Entzerrungsschritt umfasst, die spektralen Leistungsdichten $|M|^2$ des entzerrten Signals für drei Werte von $\Psi$ für $\Psi \in \left\{ 0, \dfrac{2\pi}{3}, \dfrac{4\pi}{3} \right\}$ zu messen, woraus sich die entsprechenden spektralen Leistungsdichten $|M_A|^2$, $|M_B|^2$ und $|M_C|^2$ des entzerrten Signals ergeben.

**9.** Verfahren gemäß einem der Ansprüche 3 bis 8, wobei das Kompensationssignal durch adaptives Filtern des um $\Psi$ phasenverschobenen entzerrten Signals unter Verwendung der Übertragungsfunktion $F(z)$ generiert wird.

**10.** Verfahren gemäß einem der Ansprüche 8 oder 9, wobei das erste Gleichfrequenzsignal oder das ZF-Signal eine Spektralfunktion $X(z)$ aufweist, die Signalkopplung zwischen der ersten und zweiten Antenne eine Übertragungsfunktion $A(z)$ aufweist, die Eingangsfilterung eine Übertragungsfunktion $H(z)$ aufweist, die Phasenverschiebung durch eine Übertragungsfunktion $e^{j\Psi}$ ausgedrückt werden kann, das Prozesssignal eine Spektralfunktion $M(z)$ aufweist und das in der Phase verschobene Prozesssignal eine Spektralfunktion $Y(z)$ aufweist, wobei die Spektralfunktion $M(z)$ ausgedrückt werden kann als

$$M = X \cdot H + Y \cdot A \cdot H - Y \cdot F,$$

wobei $Y = M \cdot e^{j\Psi}$,
in der Weise, dass

$$M = X \cdot H + M \cdot e^{j\Psi} \cdot (A \cdot H - F)$$

oder

$$M = X \cdot \frac{H}{1 - e^{j\Psi}(H \cdot A - F)} = X \cdot \frac{H}{1 - e^{j\Psi}\Delta},$$

und wobei

$$\Delta = H \cdot A - F = r \cdot e^{j\varphi}.$$

**11.** Verfahren gemäß Anspruch 10, wobei der Entzerrungsschritt umfasst: die Verwendung einer Hilfsfunktion $T$, wobei

$$T = \frac{\dfrac{1}{|M_A|^2} + \dfrac{1}{|M_B|^2} \cdot e^{-j\frac{2\pi}{3}} + \dfrac{1}{|M_C|^2} \cdot e^{-j\frac{4\pi}{3}}}{\dfrac{1}{|M_A|^2} + \dfrac{1}{|M_B|^2} + \dfrac{1}{|M_C|^2}},$$

auf Basis der gemessenen spektralen Leistungsdichten $|M_A|^2$, $|M_B|^2$ und $|M_C|^2$ des entzerrten Signals, zum Bestimmen und Minimieren von $H \cdot A$, um

$$M = X \cdot \frac{H}{1 - e^{j\Psi}\Delta} \xrightarrow{\Delta \to 0} X \cdot H$$

zu erhalten, indem die Filter-Übertragungsfunktion F(z) iterativ adaptiert wird, wobei sich eine entsprechend modifizierte Impulsantwort $f_{i+1} = f_i + \delta$ des Filterungsschritts aus der Addition der inversen Fourier-Transformation von $\Delta$, $\delta = iFFT(\Delta)$, zu der vorherigen Impulsantwort $f_i$ des Filterungsschritts ergibt.

**12.** Verfahren gemäß einem der Ansprüche 3 bis 11, wobei während eines Initialisierungsschritts eine pseudozufällige Trainingssignalsequenz als Eingangssignal verwendet wird, um einen Initialwert $f_1$ der Impulsantwort $f_i$ des Schritts der adaptiven Filterung zu erlangen.

**13.** Verfahren gemäß Anspruch 12, wobei der Schritt der adaptiven Filterung ein Differenzsignal zwischen dem erfassten Prozesssignal und der Trainingssignalsequenz verwendet, die entsprechend der Verzögerung des erfassten Prozesssignals bezüglich des Eingangssignals verzögert ist, um die Filterkoeffizienten des Schritts der adaptiven Filterung durch Minimieren der spektralen Leistungsdichte des Differenzsignals zu optimieren.

14. Verfahren gemäß einem der Ansprüche 3 bis 13, wobei der Schritt der adaptiven Filterung einen Optimierungsalgorithmus umfasst, der aus einer Gruppe ausgewählt ist, welche einen Least-Mean-Squares- (LMS-) -Algorithmus, einen Algorithmus des steilsten Abfalls, einen differentiellen Algorithmus des steilsten Abfalls, einen Gradientenalgorithmus, einen stochastischen Gradientenalgorithmus und einen Recursive-Least-Squares- (RLS-) -Algorithmus umfasst.

15. Repeater für Gleichfrequenzsignale, insbesondere von dem Typ, der in Gleichfrequenzsignal-Repeatern zur Verwendung in Gleichfrequenznetzen (SFN) verwendet wird, umfassend:

    - wenigstens eine erste Antenne, die ein erstes Gleichfrequenzsignal empfängt,
    - einen Wandler, der das erste Gleichfrequenzsignal durch Abwärtsmischen zu einem ZF-Signal in eine andere Frequenz umwandelt,
    - ein Bandpassfilter (10), das die erste Gleichfrequenz oder das ZF-Signal filtert und ein gefiltertes Eingangssignal als Ausgabe aufweist,
    - einen Eingangsverstärker (20), der das gefilterte Eingangssignal verstärkt, um ein verstärktes Eingangssignal zu erzeugen, so dass der Verstärkungsgewinn automatisch gesteuert wird, um eine im Wesentlichen konstante Amplitude des verstärkten Eingangssignals zu ergeben,
    - einen Analog-Digital-Wandler (30), der das verstärkte Eingangssignal oder das gefilterte Eingangssignal quantisiert, um ein quantisiertes Eingangssignal zu erzeugen,
    - einen Demodulator (40), der das verstärkte Eingangssignal, das gefilterte Eingangssignal oder das quantisierte Eingangssignal demoduliert, um ein demoduliertes Eingangssignal zu ergeben,
    - einen Entzerrer (50), der das gefilterte, verstärkte, quantisierte und/oder demodulierte Eingangssignal entzerrt, um ein entzerrtes Signal zu erzeugen, wobei der Entzerrer (50) ein Kopplungssignal zwischen der ersten und zweiten Antenne reduziert,
    - Generatormittel, die ein Kompensationssignal auf Basis des entzerrten Signals generieren, und Rückkopplungsmittel, um das Kompensationssignal zu dem entzerrten Signal rückzukoppeln,
    - einen Wandler (60), der das entzerrte Signal in ein zweites Gleichfrequenzsignal von im Wesentlichen derselben Frequenz wie das erste Gleichfrequenzsignal umwandelt,
    - ein Ausgangsfilter (70), welches das zweite Gleichfrequenzsignal filtert, um ein gefiltertes zweites Gleichfrequenzsignal zu erzeugen,
    - einen Ausgangsverstärker, der das gefilterte zweite Gleichfrequenzsignal verstärkt, um ein verstärktes zweites Gleichfrequenzsignal zu erzeugen, und
    - wenigstens eine zweite Antenne, die das verstärkte zweite Gleichfrequenzsignal sendet,

**dadurch gekennzeichnet, dass**
der Entzerrer (50) weiterhin einen variablen Phasenschieber (57) umfasst, der die Phase des entzerrten Signals durch Messen der spektralen Leistungsdichten des entzerrten Signals für wenigstens zwei Werte des vorbestimmten Winkels und Schätzen der Phase der Gesamtrückkopplung unter Verwendung der gemessenen spektralen Leistungsdichten um wenigstens einen vorbestimmten Phasenwinkel $\Psi$ verschiebt.

16. Repeater gemäß Anspruch 15, **dadurch gekennzeichnet, dass** der Entzerrer (50) adaptive Filtermittel aufweist, die eine Übertragungsfunktion F(z) aufweisen.

17. Repeater gemäß einem der Ansprüche 15 oder 16, **dadurch gekennzeichnet, dass** Erfassungsmittel vorgesehen sind, um das gefilterte, verstärkte, quantisierte und/oder demodulierte Eingangssignal kontinuierlich oder zu vorbestimmten Zeitpunkten zu erfassen, um ein erfasstes Signal zu erzeugen.

18. Repeater gemäß einem der Ansprüche 15 bis 17, **dadurch gekennzeichnet, dass** Analysiermittel (55) vorgesehen sind, die das entzerrte Signal und/oder das erfasste Signal wenigstens teilweise analysieren.

19. Repeater gemäß einem der Ansprüche 15 bis 18, **dadurch gekennzeichnet, dass** Verzögerungsmittel vorgesehen sind, um das analysierte erfasste Signal zu verzögern.

20. Repeater gemäß einem der Ansprüche 15 bis 19, **dadurch gekennzeichnet, dass** der Entzerrer (50) Digitalsignal-Verarbeitungsschaltungen umfasst.

**Revendications**

1. Un procédé pour re-transmettre des signaux de fréquence unique particulièrement du type utilisé dans des répéteurs de signal de fréquence unique pour utilisation dans des réseaux de fréquence unique (SFNs), le procédé comprenant les étapes suivantes :

   - recevoir un premier signal de fréquence unique au moyen d'au moins une première antenne,
   - convertir ledit premier signal de fréquence unique à une autre fréquence, en l'abaissant à un signal de fréquence intermédiaire (IF),
   - filtrer l'entrée dudit premier signal de fréquence unique ou dudit signal IF, en utilisant un filtre passe bande pour produire un signal d'entrée filtré,
   - amplifier ledit signal d'entrée filtré pour produire un signal d'entrée amplifié de sorte que le gain d'amplification est contrôlé automatiquement pour résulter en une amplitude en substance constante dudit signal d'entrée amplifiée,
   - quantifier ledit signal d'entrée amplifié par une conversion analogique numérique pour produire un signal d'entrée quantifié,
   - démoduler ledit signal d'entrée amplifié ou ledit signal d'entrée quantifié pour produire un signal d'entrée démodulé,
   - égaliser ledit signal d'entrée filtré, amplifié, quantifié et/ou démodulé pour fournir un signal égalisé où ladite égalisation au moins réduit un signal de couplage entre ladite première et seconde antenne en générant un signal d'annulation sur la base dudit signal égalisé, le signal d'annulation étant reconduit audit signal égalisé,
   - convertir ledit signal égalisé en un second signal de fréquence unique d'en substance la même fréquence que ledit premier signal de fréquence unique,
   - filtrer ledit second signal de fréquence unique pour produire un second signal de fréquence unique filtré,
   - amplifier ledit second signal de fréquence unique filtré pour produire un second signal de fréquence unique amplifié, et
   - transmettre ledit second signal de fréquence unique amplifié au moyen d'au moins une seconde antenne,

   **caractérisé en ce que**
   ladite égalisation comprend de plus le décalage de phase contrôlé dudit signal égalisé par au moins un angle de phase prédéterminé $\Psi$, et comprend de plus la mesure des densités de spectrales de puissance dudit signal égalisé pour au moins deux valeurs dudit angle prédéterminé et l'estimation de la phase de la rétroaction globale en utilisant lesdites densités spectrales de puissance mesurées.

2. Le procédé selon la revendication 1, où le signal égalisé est au moins partiellement analysé et où les résultats d'analyse sont utilisés pour la génération du signal d'annulation et/ou les résultats d'analyse sont utilisés pour contrôler le décalage de phase du signal égalisé.

3. Le procédé selon soit la revendication1 soit la revendication 2, où ledit signal d'annulation est généré sur la base dudit signal égalisé en utilisant un filtre adaptatif avec une fonction de transfert $F(z)$.

4. Le procédé selon l'une quelconque des revendications 1 à 3, où ladite étape d'égalisation comprend la capture dudit signal d'entrée filtré, amplifié, quantifié et/ou démodulé continuellement ou à des moments prédéterminés pour produire un signal capturé.

5. Le procédé selon la revendication 4, où ladite étape d'égalisation comprend l'analyse du signal capturé et le contrôle dudit décalage de phase en utilisant le résultat de l'analyse dudit signal capturé et/ou le contrôle de la génération dudit signal d'annulation en utilisant le résultat de l'analyse dudit signal capturé.

6. Le procédé selon l'une quelconque des revendications 1 à 5, où ladite étape d'égalisation comprend le retardement dudit signal d'égalisation par au moins un ou par un jeu d'intervalles de temps prédéterminés et/ou fixés pour former la base dudit signal d'annulation.

7. Le procédé selon la revendication 6, où ladite étape d'égalisation comprend le contrôle dudit retard(s) par ledit signal capturé analysé.

**8.** Le procédé selon l'une quelconque des revendications 1 à 7, où ladite étape d'égalisation comprend la mesure des densités spectrales de puissance $|M|^2$ dudit signal égalisé pour trois valeurs de $\Psi$ pour $\Psi \in \left\{ 0, \dfrac{2\pi}{3}, \dfrac{4\pi}{3} \right\}$ résultant en les densités spectrales de puissance correspondantes $|M_A|^2$, $|M_B|^2$ et $|M_C|^2$ dudit signal égalisé.

**9.** Le procédé selon l'une quelconque des revendications 3 à 8, où ledit signal d'annulation est généré par filtrage adaptatif dudit signal égalisé décalé de phase $\Psi$ utilisant ladite fonction de transfert $F(z)$.

**10.** Le procédé selon l'une quelconque des revendications 8 ou 9 où ledit premier signal de fréquence unique ou ledit signal IF a une fonction spectrale $X(z)$ ledit signal de couplage entre ladite première et seconde antenne a une fonction de transfert $A(z)$, ledit filtrage d'entrée a une fonction de transfert $H(z)$, ledit décalage de phase peut être exprimé par une fonction de transfert $e^{j\Psi}$, ledit signal de traitement a une fonction spectrale $M(z)$ et ledit signal de traitement décalé en phase a une fonction spectrale $Y(z)$ où ladite fonction spectrale $M(z)$ peut être exprimée comme

$$M = X \cdot H + Y \cdot A \cdot H - Y \cdot F,$$

wobei $Y = M \, . \, ,$
de sorte que

$$M = X \cdot H + M \cdot e^{j\Psi} \cdot (A \cdot H - F)$$

ou

$$M = X \cdot \frac{H}{1 - e^{j\Psi}(H \cdot A - F)} = X \cdot \frac{H}{1 - e^{j\Psi}\Delta},$$

et où

$$\Delta = H \cdot A - F = r \cdot e^{j\varphi}$$

**11.** Le procédé selon la revendication 10 où ladite étape d'égalisation comprend l'utilisation d'une fonction d'aide $T$ où

$$T = \frac{\dfrac{1}{|M_A|^2} + \dfrac{1}{|M_B|^2} \cdot e^{-j\frac{2\pi}{3}} + \dfrac{1}{|M_C|^2} \cdot e^{-j\frac{4\pi}{3}}}{\dfrac{1}{|M_A|^2} + \dfrac{1}{|M_B|^2} + \dfrac{1}{|M_C|^2}}$$

basée sur lesdites densités spectrales de puissance $|M_A|^2$, $|M_B|^2$ et $|M_C|^2$ dudit signal égalisé pour déterminer et minimiser HA pour produire

$$M = X \cdot \frac{H}{1 - e^{j\Psi}\Delta} \xrightarrow{\Delta \to 0} X \cdot H$$

en adaptant de manière itérative ladite fonction de transfert de filtre $F(z)$ où une réponse à impulsion modifiée de manière correspondante $f_{i+1} = f_i + \delta$ de ladite étape de filtrage résulte de l'addition de la transformée de Fourier inverse de $\Delta$, $\delta = iFFT(\Delta)$, à la réponse à impulsion précédente $f_i$ de ladite étape de filtrage.

**12.** Le procédé selon l'une quelconque des revendications 3 à 11, où durant une étape d'initialisation, une séquence de signal d'initiation pseudo aléatoire est utilisée comme un signal d'entrée pour obtenir une valeur initiale $f_i$ de la réponse à impulsion $f_i$ de ladite étape de filtrage adaptif.

**13.** Le procédé selon la revendication 12, où l'étape de filtrage adaptatif utilise un signal de différence entre ledit signal de traitement capturé et ladite séquence de signal d'initiation qui est retardée selon le retard dudit signal de traitement capturé relativement audit signal d'entrée, pour optimiser les coefficients de filtre de ladite étape de filtrage adaptatif en minimisant la densité spectrale de puissance dudit signal de différence.

**14.** Le procédé selon l'une quelconque des revendications 3 à 13 où ladite étape de filtrage adaptatif comprend un algorithme d'optimisation sélectionné d'un groupe comprenant un algorithme de moindres carrés moyens (LMS), un algorithme de lieu de plus grande pente, un algorithme un algorithme de lieu de plus grande pente différentiel, un algorithme de gradient, un algorithme de gradient stochastique et un algorithme de moindres carrés récursif (RLS).

**15.** Un répéteur pour des signaux de fréquence unique, en particulier du type utilisé dans des répéteurs pour utilisation dans des réseaux de fréquence unique (SFNs) comprenant :

- au moins une antenne qui reçoit un premier signal de fréquence unique,
- un convertisseur qui convertit ledit premier signal de fréquence unique à une autre fréquence en abaissant à un signal IF,
- un filtre passe bande (10) qui filtre ladite première fréquence unique dudit signal IF et ayant un signal d'entrée filtré comme sortie,
- un amplificateur d'entrée (20) qui amplifie ledit signal d'entrée filtré pour produire un signal d'entrée amplifié de sorte que le gain d'amplification est automatiquement contrôlé pour résulter en une amplitude constante en substance dudit signal d'entrée amplifié,
- un convertisseur analogique numérique (30), qui quantifie ledit signal d'entrée amplifié ou ledit signal d'entrée filtré pour produire un signal d'entrée quantifié,
- un démodulateur (40) qui démodule ledit signal d'entrée amplifié, ledit signal d'entrée filtré ou ledit signal d'entrée quantifié pour résulter en un signal d'entrée démodulé,
- un égaliseur (50) qui égalise ledit signal d'entrée filtré, amplifié, quantifié et/ou démodulé pour produire un signal égalisé, où ledit égaliseur (50) réduit un signal de couplage entre ladite première et seconde antenne,
- des moyens de générateur qui génèrent un signal d'annulation basé sur un signal égalisé et des moyens de rétroaction pour reconduire ledit signal d'annulation audit signal égalisé,
- un convertisseur (60) qui convertit ledit signal égalisé en un second signal de fréquence unique de substantiellement la même fréquence que le premier signal de fréquence unique,
- un filtre de sortie (70) qui filtre ledit second signal de fréquence unique pour créer un second signal de fréquence unique filtré,
- un amplificateur de sortie qui amplifie ledit second signal de fréquence unique filtré pour créer un second signal de fréquence unique amplifié, et
- au moins une seconde antenne qui transmet ledit second signal de fréquence unique amplifié,

**caractérisé en ce que**
ledit égaliseur (50) comprend de plus un déphaseur variable (57) qui décale la phase dudit signal égalisé d'au moins un angle de phase prédéterminé $\Psi$, en mesurant les densités de spectrales de puissance dudit signal égalisé pour au moins deux valeurs dudit angle prédéterminé et estimer la phase de la rétroaction globale en utilisant lesdites densités spectrales de puissance mesurées.

**16.** Le répéteur selon la revendication 15, **caractérisé en ce que** l'égaliseur (50) inclut des moyens de filtre adaptatif ayant une fonction de transfert $F(z)$.

**17.** Le répéteur de l'une quelconque des revendications 15 ou 16, **caractérisé en ce que** des moyens de capture sont fournis pour capturer ledit signal d'entrée filtré, amplifié, quantifié et/ou démodulé continuellement ou à des moments prédéterminés pour produire un signal capturé.

**18.** Le répéteur selon l'une quelconque des revendications 15 à 17, **caractérisé en ce que** des moyens d'analyse (55) sont fournis qui au moins partiellement analysent ledit signal égalisé et/ou ledit signal capturé.

**19.** Le répéteur selon l'une quelconque des revendications 15 à 18 **caractérisé en ce que** des moyens de retardement sont fournis pour retarder ledit signal capturé analysé.

**20.** Le répéteur selon l'une quelconque des revendications 15 à 19, **caractérisé en ce que** l'égaliseur (50) comprend le circuit de traitement de signal numérique.

Fig. 1a

Fig. 1b

Fig. 2

Simutation setup 1: External feedback consists of three paths:
Path 1: gain margin = 10.5dB delay = 120ns
Path 2: gain margin = 16.5dB delay = 450ns
Path 3: gain margin = 24.4dB delay = 1650us
Input signal: DVB-T signal (8MHz), without ripple.

Output signal with feedback compensation OFF:  pp-ripple is app. 10dB!

**Fig. 3a**

Output signal with feedback compensation ON:  pp-ripple negligible

**Fig. 3b**

Simulation setup 2: External feedback consists of three paths:
Path 1: gain margin = 10.5dB delay = 120ns
Path 2: gain margin = 16.5dB delay = 450ns
Path 3: gain margin = 24.4dB delay = 1650us
Input signal: DVB-T signal (8MHz), with ripple of app. 1.5dB

Output signal with feedback compensation OFF: pp-ripple is app. 10dB!

**Fig. 4a**

Output signal with feedback compensation ON: pp-ripple identical to input signal

**Fig. 4b**

Simulation setup 3: External feedback consists of three paths:
Path 1: gain margin = 1.9dB delay = 120ns
Path 2: gain margin = 8.9dB delay = 450ns
Path 3: gain margin = 15.9dB delay = 1650us
Input signal: DVB-T signal (8MHz), with ripple of app. 1.5dB

Output signal with feedback compensation OFF: pp-ripple is app. 27dB, system on the border to be unstable

## Fig. 5a

Output signal with feedback compensation ON: pp-ripple identical to input signal

## Fig. 5b

**REFERENCES CITED IN THE DESCRIPTION**

**Patent documents cited in the description**

- EP 1261148 A1